# EUROPEAN PATENT APPLICATION

(11) **EP 3 257 371 A1**
(43) Date of publication of application: **20.12.2017**
(21) Application number: 16863573.8
(22) Date of filing: 03.11.2016
(51) Int. Cl.: A01K 47/04

(54) **MULTILAYER ARTIFICIAL HONEYCOMB**

(30) Priority: 11.11.2015 HK 15111142
(71) Applicant: Lou, Kai Ching, Aberdeen, Hong Kong (CN)
(72) Inventor: Lou, Kai Ching, Aberdeen, Hong Kong (CN)
(74) Representative: Izquierdo Blanco, Maria Alicia
(86) International application number: PCT/CN2016/104406
(87) International publication number: WO 2017/080396

(57) **Abstract**

A multilayer artificial honeycomb is provided, the honeycomb comprises a plurality of combs; wherein each of the combs includes a plurality of working units working independently from each other; each of the working units includes an artificial frame and three layers of honey-storing rooms movably arranged in the artificial frame. The present application is flexible based on the combs construction property of different kinds of bees, suitable to the bees which store honey and breed in the same comb, such as Chinese honeybee, scoliid, bumblebee and the like. Therefore, the honeycomb produces honey all the year round, and is suitable for the regions in high altitudes, cold and having few nectar sources, and also suitable for mountainous areas and fields. The present application facilitates the popularization of breeding and application of Asian bees.

## Description

### TECHNICAL FIELD

The present application relates to the technical field of artificial honeycomb, and more particularly relates to a multilayer artificial honeycomb.

### BACKGROUND

Traditional honey gathering processes are extremely complicated, during which a beekeeper needs to wear protective clothing, and further carry out processes including smoking bees, opening the beehive, cleaning, sweeping the bees, cutting the honeycomb, and extracting honey. During the honey gathering processes, the beekeeper and the bees are prone to harm, bee larvae are prone to die, and the harvest is likely to be reduced. Furthermore, the expansion of beekeeping is limited due to the high cost and the high dependence on experience.

Design product of Flow™(http://www.honeyflow.com/)mainly aims at the feature that a honey super (configured for storing honey) and a nest box (configured for breeding) are separated from each other, improves the honey-gathering way of the super without influencing the breeding of the colony in the nest box. However, the honey is insufficient after the honey gathering process, and thus it is not enough for the colony to achieve the self-sufficiency and sustainable development. The design cannot be used with Chinese bees, since the product of Flow™ will squeeze the bee pupa when gathering the honey, resulting in death of the pupa due to the fact that the Chinese bees store the honey and brood in the same comb.

### BRIEF SUMMARY

The objective of the present application is to provide amultilayer artificial honeycomb, which eliminates the drawbacks of the prior process described above. The multilayer artificial honeycomb of the present application is suitable for all kinds of bees which construct the honey-storing area and the breeding area in the same comb (such as Chinese honeybee, scoliid, and the like). It is easier to gather honey whilst reduce the impact to the breeding area. Furthermore, a part of honey may be reserved for the colony.

In accordance with one aspect of the present application, a multilayer artificial honeycomb is provided, which comprises a plurality of combs; wherein each of the plurality of combs includes a plurality of working units working independently from each other; each of the plurality of working units includes an artificial frame and three layers of honey-storing rooms movably arranged in the artificial frame.

In one embodiment, the three layers of the honey-storing rooms are spaced from each other at intervals, and the intervals are filled with beewax.

In one embodiment, a honey-storing room is arranged below the artificial frame, and a guide tube is arranged on the artificial frame.

In one embodiment, each layer of the honey-storing rooms has a plurality of compartments adjacent to each other; each of the plurality compartments is in shape of a regular hexagon.

In one embodiment, when gathering honey from the plurality of working units, the second layer of honey-storing room is moved, thereby three layers of the honey-storing rooms are offset one another, in such a way that gaps are form between the three layers of the honey-storing rooms; bees enter the honey-storing room via the gaps and leave the honey-storing room via the guide tube.

In one embodiment, the multilayer artificial honeycomb further comprises a microprocessor arranged on the comb, a detector arranged in the honey-storing room configured for detecting an amount of the honey, and a wireless transmitter; the microprocessor is connected to the detector and the wireless transmitter; the microprocessor sends corresponding prompt messages to a terminal via the wireless transmitter based on the information of the amount of the honey detected by the detector.

In one embodiment, the detector is a hydraulic sensor arranged on a bottom wall on the inner side of the honey-storing room.

In accordance with a further aspect of the present application, a multilayer artificial honeycomb is further provided, which comprises a plurality of combs; wherein each of the combs includes a plurality of working units working independently from each other; each of the plurality of working units includes an artificial frame and three layers of honey-storing rooms movably arranged in the artificial frame; the three layers of the honey-storing rooms are spaced from each other at intervals, and the intervals are filled with beewax; a honey-storing room is arranged below the artificial frame, and a guide tube is arranged on the artificial frame; each layer of the honey-storing rooms has a plurality of compartments adjacent to each other; each of the plurality of compartments is in shape of a regular hexagon; when gathering honey from the plurality of working units, the second layer of honey-storing room is moved, thereby three layers of the honey-storing rooms are offset one another, in such a way that gaps are form between the three layers of the honey-storing rooms; bees enter the honey-storing room via the gaps and leave the honey-storing room via the guide tube; bees enter the honey-storing room via the gaps and leave the honey-storing room via the guide tube.

In accordance with a further aspect of the present application, a multilayer artificial honeycomb is further provided, which comprises a plurality of combs; wherein each of the plurality of combs includes a plurality of working units working independently from each other; each of the plurality of working units includes an artificial frame and three layers of honey-storing rooms movably arranged in the artificial frame; the three layers of the honey-storing rooms are spaced from each other at intervals, and the intervals are filled with beewax; a honey-storing room is arranged below the artificial frame, and a guide tube is arranged on the artificial frame; each layer of the honey-storing rooms has a plurality of compartments adjacent to each other; each of the plurality of compartments is in shape of a regular hexagon; when gathering honey from the plurality of working units, the second layer of honey-storing room is moved, thereby three layers of the honey-storing rooms are offset one another, in such a way that gaps are form between the three layers of the honey-storing rooms; bees enter the honey-storing room via the gaps and leave the honey-storing room via the guide tube; bees enter the honey-storing room via the gaps and leave the honey-storing room via the guide tube; the a plurality of working units are arranged on the comb; the plurality of compartments are configured for storing honey, and are sealed off after the honey storing process is finished; the three layers of the honey-storing rooms and the beewax are in different colors; where the three layers of the honey-storing rooms are orange, while the beewax is yellow; each layer of the honey-storing rooms is full of compartments.

When implementing the technical solution of the present application, the multilayer artificial honeycomb of the present application can be used for a long period of time, omitting the traditional honey gathering process, reducing cost, simplifying the process, and whilst reducing the interference to normal activities of the colony, popularizing beekeeping, and maintaining the global eco-balance. The multilayer artificial honeycomb of the present application is suitable for all kinds of bees which construct the honey-storing area and the breeding area in the same comb (such as Chinese honeybee, scoliid, and the like). In this way, it is easier to gather honey whilst reducing the impact to the breeding area. Furthermore, a part of honey may be reserved for the colony.

### BRIEF DESCRIPTION OF THE DRAWINGS

The present application will be further described with reference to the accompanying drawings and embodiments in the following; in the accompanying drawings:
Fig.1 is a schematic view of a multilayer artificial honeycomb of the present application.
Fig. 2 is a partially enlarged view of Fig. 1.
Fig. 3 is a schematic view of the multilayer artificial honeycomb of the present application during the honey gathering process.

### DETAILED DESCRIPTION OF THE PREFERRED EMBODIMENT

The objective, the features and the characteristic of the present application, the operation method and the function of relative components and the combination of the components in structure will become more evident with reference to the accompanying drawings, the specific embodiments and the claims. It should be explicitly understood that, the accompanying drawings are only for description and illustration, and not for limitation to the present application.

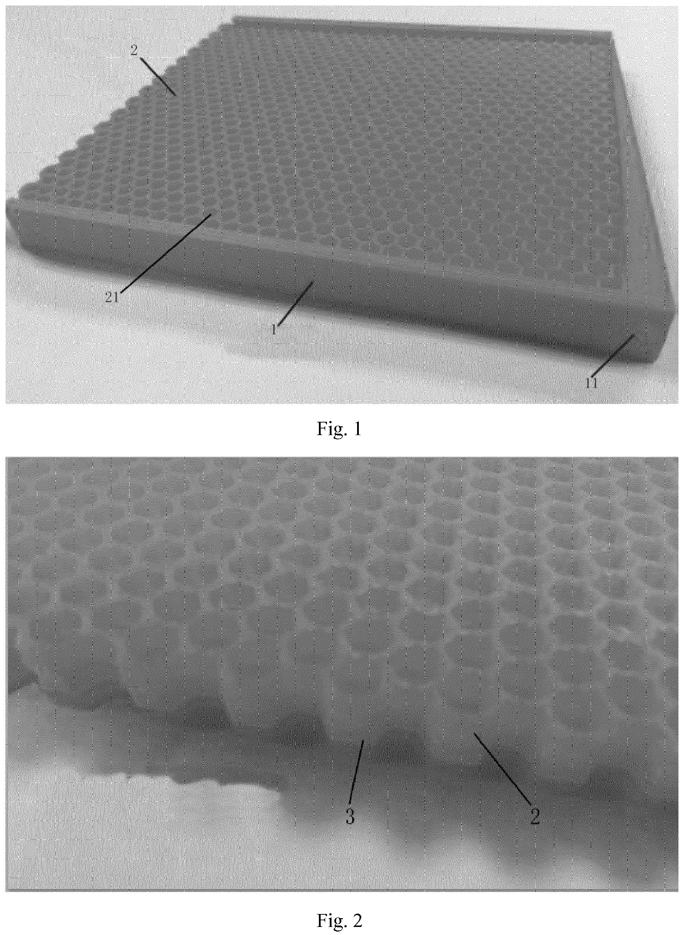

Fig. 1 shows a multilayer artificial honeycomb according to an embodiment of the present application. As is shown in Fig. 1, the multilayer artificial honeycomb comprises of a plurality of combs (not shown in Fig. 1). Each of the plurality of combs includes a plurality of working units working independently from each other. That is, a plurality of working units working independently from each other may be placed in each of the combs as required. Each of the plurality of working units may include an artificial frame 1 and three layers of honey-storing rooms 2 detachably or movably arranged in the artificial frame 1. The three layers of the honey-storing rooms 2 are spaced from each other at intervals; bees will fill the intervals between individual components with beewax 3 naturally, as is shown in Fig. 2.

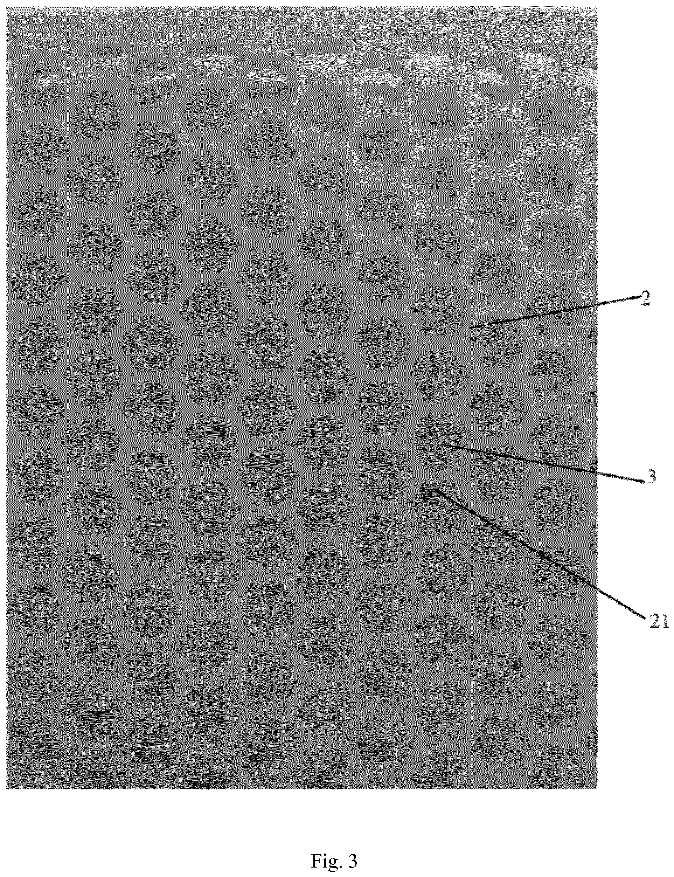

In addition, as is further shown in Fig. 1, a honey-storing room is arranged below the artificial frame, and a guide tube 11 is further arranged on the artificial frame. Each layer of the honey-storing rooms 2 has a plurality of compartments 21 adjacent to each other. Each of the compartments 21 is in shape of a regular hexagon, and the plurality of compartments 21 are adjacent to each other. As is shown in Fig. 3, when gathering honey from the plurality of working units, the second layer of the honey-storing room among the three layers of the honey-storing rooms 2 is moved (the second layer is the one sandwiched between the other two layers of the honey-storing rooms), therefore the plurality of compartments 21 of the three layers of the honey-storing rooms are offset one another, in such a way that gaps are form between the three layers of the honey-storing rooms. The bees enter the honey-storing room via the gaps and leave the honey-storing room via the guide tube 11.

In specific installation, the plurality of working units may be arranged in suitable positions on the plurality of combs as required. A plurality of compartments 21 are configured for the bees to store honey, and are sealed off after the honey storing process is finished. In specific configuration, the three layers of the honey-storing rooms 2 and the beewax 3 are in different colors. In this case, the three layers of the honey-storing rooms 2 are orange, while the beewax 3 is yellow. Each layer of the honey-storing rooms 2 is full of compartments 21.

It may be understood that, the multilayer artificial honeycomb of the present application may further comprise a microprocessor arranged on the comb, a detector arranged in the honey-storing room and configured for detecting an amount of the honey, and a wireless transmitter. The microprocessor is respectively connected to the detector and the wireless transmitter. The microprocessor sends corresponding prompt messages to a terminal via the wireless transmitter based on information of the amount of the honey detected by the detector. In this case, the detector is a hydraulic sensor arranged on a bottom wall on the inner side of the honey-storing room. Certainly, it may be possible for the detector to be another kind of sensor. The wireless transmitter may be a Bluetooth communication device or a WIFI communication device.

In this way, the multilayer artificial honeycomb can be used for long period of time, and thus the traditional honey gathering process can be omitted. Therefore, it is possible to reduce cost, simplify the processes, and whilst reduce the interference to normal activities of the colony, popularize beekeeping, and maintain the global eco-balance. The multilayer artificial honeycomb of the present application is suitable for all kinds of bees which construct the honey-storing area and the breeding area in the same comb (such as Chinese honeybee, scoliid, and the like). In this way, it is easier to gather honey whilst reduce the impact to the breeding area. Furthermore, a part of honey may be reserved for autotrophy of the colony.

Those described above are only preferred embodiments of the present application, and are not for limitation. Those skilled in the art may make many alternatives or modification to the embodiments, according to the disclosure and motivation of the specification. All the modifications, alternatives or improvements made in the inspiration of the present application should fall in the protection scope of the claims of the present application.

## Claims

1. A multilayer artificial honeycomb, comprising a plurality of combs; wherein each of the combs includes a plurality of working units working independently from each other; each of the plurality of working units includes an artificial frame and three layers of honey-storing rooms movably arranged in the artificial frame.

2. The multilayer artificial honeycomb as described in claim 1, wherein the three layers of the honey-storing rooms are spaced from each other at intervals and the intervals are filled with beewax.

3. The multilayer artificial honeycomb as described in claim 1, wherein a honey-storing room is arranged below the artificial frame, and a guide tube is arranged on the artificial frame.

4. The multilayer artificial honeycomb as described in claim 3, wherein each layer of the honey-storing rooms has a plurality of compartments adjacent to each other; each of the plurality of compartments is in shape of a regular hexagon.

5. The multilayer artificial honeycomb as described in claim 4, wherein when gathering honey from the plurality of working units, the second layer of honey-storing room is moved, thereby three layers of the honey-storing rooms are offset one another, in such a way that gaps are form between the three layers of the honey-storing rooms; bees enter the honey-storing room via the gaps and leave the honey-storing room via the guide tube.

6. The multilayer artificial honeycomb as described in claim 4, further comprising a microprocessor arranged on the comb, a detector arranged in the honey-storing room and configured for detecting an amount of the honey, and a wireless transmitter; the microprocessor is connected to the detector and the wireless transmitter; the microprocessor sends corresponding prompt messages to a terminal via the wireless transmitter based on the information of the amount of the honey detected by the detector.

7. The multilayer artificial honeycomb as described in claim 6, wherein the detector is a hydraulic sensor arranged on a bottom wall on the inner side of the honey-storing room.

8. A multilayer artificial honeycomb, comprising a plurality of combs; wherein each of the combs includes a plurality of working units working independently from each other; each of the working units includes an artificial frame and three layers of honey-storing rooms movably arranged in the artificial frame; the three layers of the honey-storing rooms are spaced from each other at intervals, and the intervals are filled with beewax; a honey-storing room is arranged below the artificial frame, and a guide tube is arranged on the artificial frame; each layer of the honey-storing rooms has a plurality of compartments adjacent to each other; each of the plurality of compartments is in shape of a regular hexagon;when gathering honey from the plurality of working units, the second layer of honey-storing room is moved, thereby three layers of the honey-storing rooms are offset one another, in such a way that gaps are form between the three layers of the honey-storing rooms; bees enter the honey-storing room via the gaps and leave the honey-storing room via the guide tube.

9. A multilayer artificial honeycomb, comprising a plurality of combs; wherein each of the plurality of combs includes a plurality of working units working independently from each other; each of the plurality of working units includes an artificial frame and three layers of honey-storing rooms movably arranged in the artificial frame; the three layers of the honey-storing rooms are spaced from each other at intervals, and the intervals are filled with beewax; a honey-storing room is arranged below the artificial frame, and a guide tube is arranged on the artificial frame; each layer of the honey-storing rooms has a plurality of compartments adjacent to each other; each of the plurality of compartments is in shape of a regular hexagon; when gathering honey from the plurality of working units, the second layer of honey-storing room is moved, thereby three layers of the honey-storing rooms are offset one another, in such a way that gaps are form between the three layers of the honey-storing rooms; bees enter the honey-storing room via the gaps and leave the honey-storing room via the guide tube; a plurality of working units are arranged on the comb; the plurality of compartments are configured for storing honey, and are sealed off after honey storing process is finished; the three layers of the honey-storing rooms and the beewax are in different colors; wherein the three layers of the honey-storing rooms are orange, while the beewax is yellow; each layer of the honey-storing rooms is full of compartments.
